# EUROPEAN PATENT SPECIFICATION

(11) **EP 4 315 807 B1**
(45) Date of publication and mention of the grant of the patent: **04.03.2026**
(21) Application number: 21716339.3
(22) Date of filing: 30.03.2021
(51) Int. Cl.: H04L 67/12, G05B 19/418

(54) **DIGITAL TWIN INSTANTIATION AND REGISTRATION**
DIGITALE ZWILLINGSINSTANZIIERUNG UND -REGISTRIERUNG
INSTANCIATION ET ENREGISTREMENT DE JUMEAU NUMÉRIQUE

(43) Date of publication of application: 07.02.2024
(73) Proprietor: Telefonaktiebolaget LM Ericsson (publ), 164 83 Stockholm (SE)
(72) Inventor: ESSIGMANN, Kurt, 52072 Aachen (DE); TONUTTI, Wolfgang, 52066 Aachen (DE)
(74) Representative: Ericsson
(86) International application number: PCT/EP2021/058303
(87) International publication number: WO 2022/207082

(56) References cited:
- WO-A1-2020/040772
- INDUSTRIAL INTERNET CONSORTIUM: "Digital Twins for Industrial Applications", 18 February 2020 (2020-02-18), XP002804980, Retrieved from the Internet <URL:https://www.iiconsortium.org/pdf/IIC_Digital_Twins_Industrial_Apps_White_Paper_2020-02-18.pdf> [retrieved on 20211207]

## Description

### Technical field

The present application relates to a method for operating an industrial device and to the corresponding industrial device. Furthermore, a method for operating a management entity configured to manage digital twins of industrial devices is provided and the corresponding management entity. In addition a method for operating a digital twin of an industrial device is provided together with the corresponding digital twin. A system comprising at least two from a group comprising the industrial device, the management entity and the digital twin is provided, a computer program comprising program code and a carrier comprising the computer program.

### Background

In the industrial automation technology cyber-physical systems (CPS) are used to represent in the digital space any physical asset that may or may not be already digitized and may or may not have the ability to communicate.

Digital twins (DT) are digital instances which represent the key characteristics and capabilities of any assets such as a robot, electrical drive, conveyor belts, valves, pressure sensors, etc. Digital twins communicate with other digital twins of other assets to exchange process-related data - they may also communicate with the asset or asset group they represent to stay in synchronization data.

A factory operator can use the digital twins to configure an asset (change parameters), read asset data sheets and properties, emulate the behavior of the asset without involving the asset itself, receive performance and condition data about the asset, etc.

In the context of Industry 4.0 a digital twin of a manufacturing or production is called an Asset Administration Shell (AAS 4.0). AAS are subdivided into AAS classes and AAS instances, where a class represents the AAS functions and parameters of an asset of a certain type, while the instance is the specific DT instance representing a specific asset identified by a unique device ID.

Since a 5G network and all 5G enabled industrial devices deployed to an enterprise for industrial communications are considered as asset too, these 5G assets also have to be represented by DTs so that an enterprise operator can manage them like all other assets that have their own DTs. The same applies for 4G and WIFI devices in a 4G and WIFI networks, respectively.

Assets in a production environment require dedicated and unique configuration parameters and characteristics. In the following the term industrial device will be used in order to represent an asset in its technical implementation.

This configuration is stored in the digital twin of the industrial device (asset) and is dependent on the type of the device and the specific location i.e. production cell on the shopfloor where the device will be installed and connected.

The shopfloor network topology is today used to identify the device location (ethernet broadcast domain and routing information can be used to identify a specific production cell) Connecting the devices wirelessly via a wireless communications system increases the challenge to identify the correct digital twin as the device can be located anywhere in the shopfloor network.

Two main use cases are addressed:
1. manual configuration after initial device installation.
2. manual configuration adjustment after device replacement.

Considering that dozens to hundreds of similar or same devices can be deployed on a production shopfloor this procedure is very error prone and costly. Document WO 2020/040772 A1 (SIEMENS AG [DE]; SIEMENS CORP [US]) 27 February 2020 (2020-02-27) teaches a generic cloud-based digital twin system.

Accordingly a need exists to optimize the deployment of industrial devices together with their digital twins and to minimize the errors when configuring industrial devices.

### Summary

This need is met by the features of the independent claims. Further aspects are described in the dependent claims.

According to a first aspect a method for operating an industrial device is provided which is connected to a cellular network, wherein the method comprises the step of determining a network identifier identifying the cellular network. Furthermore, a communication identifier is determined by the industrial device by which the industrial device is uniquely identified when communicating in the cellular network. Additionally, a network address of a management entity configured to manage digital twins of a plurality of industrial devices in the cellular network is determined taking into account at least the network identifier and the communication identifier. Furthermore, a type identifier identifying a type of the industrial device is determined and a discover request is transmitted to the management entity based on the determined network address, wherein the discover request comprises at least the communication identifier and the type identifier.

Furthermore, the corresponding industrial device is provided which is configured to operate as discussed above or as discussed in further detail below.

The industrial device may comprise a first module configured to determine the network identifier identifying the cellular network. The industrial device can comprise a second module configured to determine the communication identifier by which the industrial device is uniquely identified when communicating in the cellular network. A third module can be provided configured to determine the network address of the management entity configured to manage digital twins of a plurality of industrial devices in the cellular network taking into account at least the network identifier and the communication identifier. A further module can be configured to determine a type identifier identifying a type of device of the industrial device and another module can be configured to transmit a discover request to the management entity based on the determined network address wherein this discover request comprises at least the communication identifier and the type identifier.

The industrial device may also comprise a memory and at least one processing unit wherein the memory contains instructions executable by the at least one processing unit wherein the industrial device is configured to operate as mentioned above or as discussed below.

With the above described method the industrial device is able to automatically detect and get connected to the management entity which is managing the different digital twins in the cellular network. With the connection to the management entity it is possible to obtain a network address of the digital twin of the industrial device, so that the industrial device is able to connect to its digital twin.

According to a further aspect a method for operating a management entity is provided which is configured to manage digital twins of a plurality of industry devices. The management entity receives a discover request from a first industrial device of the plurality of industrial devices wherein the discover request comprises at least a communication identifier by which the industrial device is uniquely identified when communicating in the cellular network. The discover request furthermore comprises a type identifier identifying which type of device the industrial device is. The management entity can check whether the communication identifier of the first industrial device is already known to the management entity. If this is not the case, it is determined whether the type identifier of the first industrial device is known to the management entity. If this is the case, a new digital twin is instantiated for the first industrial device based on the device type of the first industrial device and a new network address is determined for the new digital twin. Additionally a discover response is transmitted to the first industrial device comprising the new network address for the new digital twin.

Additionally, the corresponding management entity is provided which is configured to operate as discussed above or as discussed in further detail below.

The management entity can comprise a first module configured to receive the discover request from the first industrial device of the plurality of industrial devices, wherein the discover request comprises at least a communication identifier by which the industrial device is uniquely identified when communicating in the cellular network and comprises a type identifier identifying which type of device the industrial device is. A second module of the management entity can be configured to check whether the communication identifier of the first industrial device is already known to the management entity. A third module can be configured to determine whether the type identifier of the first industrial device is known to the management entity, if the communication identifier is not known for the management entity. If this is the case, a further module can be configured to instantiate a new digital twin for the first industrial device based on the device type of the first industrial device. A further module can be configured to determine a new network address for new digital twin and another module can be configured to transmit a discover response to the first industrial device comprising the new network address.

The management entity receives the discover request from the industrial device and generates a new digital twin when the device type is known, and the communication identifier is not known and transmits the network address to the industrial device so that the industrial device can directly access its digital twin using the network address as received from the management entity.

Furthermore, a method for operating a digital twin of an industrial device is provided wherein the digital twin and the industrial device are connected to a cellular network. The digital twin receives a register message from the industrial device wherein the register message comprises a type identifier identifying which type of device the industrial device is, the register message furthermore comprising a communication identifier by which the industry device is uniquely identified when communicating in the cellular network. The register message furthermore comprises a device identifier uniquely identifying the industrial device. The digital twin determines whether the received device identifier and the received communication identifier correspond to the corresponding already stored device identifier and the corresponding already stored communication identifier, respectively which are stored in connection with the digital twin of the industrial device. If the received device identifier does not correspond to the already stored device identifier but the received communication identifier does correspond to the already stored device identifier, a transmission of operating parameters of the industrial device is initiated to the industrial device.

Furthermore, the corresponding digital twin is provided configured to operate as discussed above or as discussed below.

The digital twin can comprise a first module configured to receive the register message from the industrial device wherein the message comprises the type identifier and the communication identifier. The received message furthermore comprises the device identifier. A second module of the digital twin can be configured to determine whether the received device identifier and the received communication identifier correspond to the already stored device identifier and the already stored communication identifier respectively which are stored in connection with the digital twin of the industrial device. If the received device identifier does not correspond to the already stored device identifier but the received communication identifier corresponds to the already stored communication identifier, a third module is configured to initiate a transmission of operating parameters of the industrial device to the industrial device.

The digital twin can furthermore comprise a memory and at least one processing unit wherein the memory contains instructions executable by the at least one processing unit wherein the digital twin is operative to work as discussed above or as discussed in further detail below.

Furthermore, a system is provided comprising at least two elements from the group comprising the industrial device, the management entity and the digital twin.

Additionally a computer program comprising program code to be executed by at least one processing unit of the industrial device, the management entity, or the digital twin is provided wherein execution of the program code causes the at least one processing unit to carry out a method as mentioned above or as discussed in detail below.

Last but not least a carrier is provided comprising the computer program, wherein the carrier is one of an electronic signal, optical signal, radio signal, and computer readable storage medium.

It is to be understood that the features mentioned above and features yet to be explained below can be used not only in the respective combinations indicated, but also in other combinations or in isolation without departing from the scope of the present invention. Features of the above-mentioned aspects and embodiments described below may be combined with each other in other embodiments unless explicitly mentioned otherwise.

### Brief description of the Drawings

The foregoing and additional features and effects of the application will become apparent from the following detailed description when read in conjunction with the accompanying drawings in which like reference numerals refer to like elements.
Fig. 1 shows an architectural overview of a system in which industrial devices are managed by a management entity to connect them to their digital twins.
Fig. 2 shows an example flowchart of a method carried out by the industrial device to contact the management entity when it is powered on for the first time.
Fig. 3 shows an example flowchart of a method carried out by the management entity after being contacted by an industrial device in order to generate a new digital twin.
Fig. 4 shows an example flowchart of a method carried out by the digital twin after being contacted by the industrial device.
Fig. 5 shows an example message exchange between the entities involved and shown in Fig. 1.
Fig. 6 shows an example flowchart carried out by the industrial device in order to determine the network address of the management entity.
Fig. 7 shows an example flowchart carried out by the management entity when receiving a message from the industrial device.
Fig. 8 shows an example flowchart carried out by the digital twin when receiving a message from the industrial device.
Fig. 9 shows an example schematic representation of an industrial device used in the architecture of Fig. 1.
Fig. 10 shows another example schematic representation of an industrial device used in the architecture of Fig. 1.
Fig. 11 shows an example schematic representation of a management entity configured to manage the plurality of industrial devices in an architecture shown in Fig. 1.
Fig. 12 shows another example schematic representation of a management entity configured to manage a plurality of industrial devices in the architecture shown in Fig. 1.
Fig. 13 shows an example schematic representation of a digital twin used in the architecture of Fig. 1.
Fig. 14 shows another example schematic representation of a digital twin used in the architecture of Fig. 1.

### Detailed description

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are to be illustrative only.

The drawings are to be regarded as being schematic representations, and elements illustrated in the drawings are not necessarily shown to scale. Rather, the various elements are represented such that their function and general purpose becomes apparent to a person skilled in the art. Any connection or coupling between functional blocks, devices, components of physical or functional units shown in the drawings and described hereinafter may also be implemented by an indirect connection or coupling. A coupling between components may be established over a wired or wireless connection. Functional blocks may be implemented in hardware, software, firmware, or a combination thereof.

In the following industrial devices are discussed which are connected to a cellular network. The connection may be obtained using a mobile entity or user equipment which is connected to the industrial device and which is responsible for the communication with the cellular network. The term mobile entity or user equipment, UE, refers to a device for instance used by a person such as a user for his or her personal communication. It can be a telephone type of device, or a mobile station, a personal digital assistant type of device like laptop, notebook, notepad, tablet equipped with a wireless data connection. The UE may be also associated with nonhumans like animals, plants, or machines. The industrial device can be an IOT device, Internet of Things device. The UE may be equipped with a Subscriber Identity Module, SIM comprising unique identities such as the IMSI, International Mobile Subscriber Identity, TMSI, Temporary Mobile Subscriber Identity or GUTI, Globally Unique Temporary UE Identity associated with the user using the UE. The presence of a SIM within the UE customizes the UE uniquely with a subscription of a user.

For the sake of clarity, it is noted that there is a difference but also tight connection between a user and a subscriber. The user gets access to the network by acquiring a subscription to the network and by that becomes a subscriber within the network. The network then recognizes the subscriber, by using the IMSI or TMSI or GUTI or other like, and uses the associated subscription to identify related subscriber data.

In the following procedures and methods are discussed that allow an industrial device connected to a cellular network such as a 5G, 4G or Wi-Fi network to automatically detect and get connected to its digital twin instance. Furthermore, a newly instantiated digital twin instance synchronizes parameters with the device itself after the instantiation and the detection procedure.

Furthermore, methods and procedures are discussed how a management entity configured to manage a plurality of digital twins detects the need for a new digital twin instance when a new device is powered on for the first time.

In addition, methods and procedures are discussed which are employed at an already instantiated device digital twin to detect that a device has been replaced by another device of the same type and that the new device is updated with the parameters stored previously.

In the following, embodiments are discussed in which the industrial device and the networks adhere to the 5G, 4G or Wi-Fi standards. It should be understood that any other cellular network standard might be used. In the following the identities are used that apply to a 5G network and a device connected to a 5G network. In a 4G network or Wi-Fi network some parameters have different names but serve the same purpose and are used in the procedures below in a similar way.

| **Parameter name** | **5G** | **4G** | **WIFI** |
|---|---|---|---|
| Unique communication module ID | GPSI | IMSI | Device MAC-address |
| Network ID | NPN-ID | PLMN-ID | SSID |
| Access Network ID | DNN | APN | N/A |

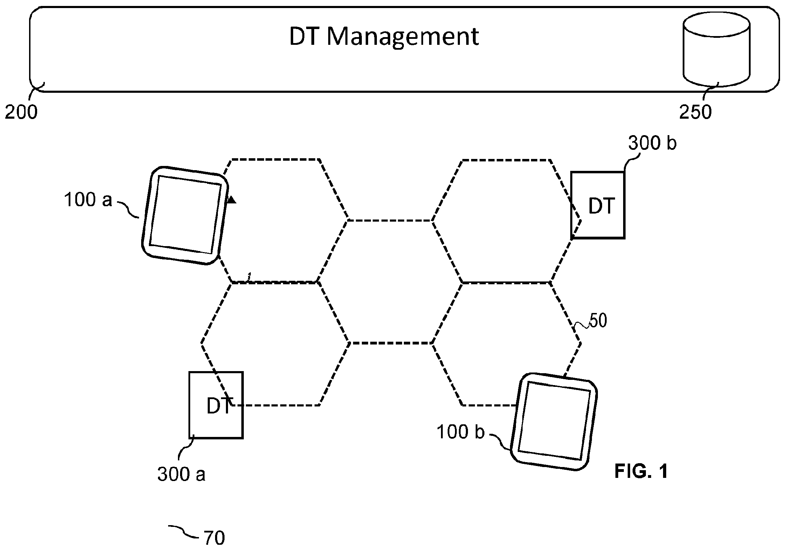

Fig. 1 shows an architectural overview in which different industrial devices such as devices 100 a, 100 b, are connected to a cellular network 50 which may be a private 5G non-public network, NPN. Furthermore, a management entity 200 is provided which is configured to manage the digital twins of all industrial devices connected to the network 50. The management entity 200 can comprise a database 250 where the different types of digital twins are stored in digital twin type repository. Furthermore, the digital twins 300 a and 300 b are shown wherein the digital twin 300 a is the digital twin of industrial device 100 a and the digital twin 300 b is the digital twin of the device 100 b.

In the following the detection procedure is discussed in more detail when a new industrial device is powered on for the first time in the network 50. After getting initial network connectivity, the device will construct the address of the management entity and will send a discover request message to the management entity in which it asks for the address of the digital twin. The industrial device 100 can construct the address of the management entity from the read broadcast network identifier, the NPN-ID, its own communication identifier such as the GPSI and optionally the access network identifier, DNN, it had used to obtain connectivity. The thus constructed address of the management entity may look like the following:

### http://NPN-ID.DNN.com,

It should be understood that the exact format may be agreed upon and configured before the device and the network deployment in all devices from the vendors. In case of a Wi-Fi network the Access Network ID may be omitted and replaced with an arbitrary string.

As an alternative the format of the address of the management entity may also be stored on the SIM card that the network operator owns and provides for each device.

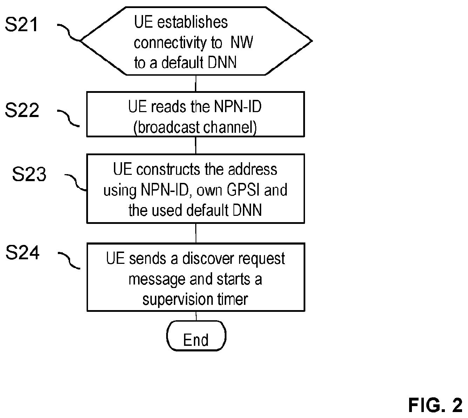

Referring to Fig. 2 the detection procedure is discussed in more detail. In step S21 the UE has powered on and has established a connectivity to the cellular network using a default access network. In step S22 the UE or industrial device reads the network identifier, the NPN-ID from the broadcast channel. In step S23 the UE constructs the address of the management entity by means of the network identifier, the NPN-ID, the own communication identifier, the GPSI, and optionally the access network identifier, DNN.

In step S24 the UE then sends a discover request message to the management entity and may start a supervision timer for receiving the response.

As will be discussed below the management entity can determine the network address of the digital twin and can send a response including the network address of the digital twin. In a step not shown in Fig. 2, when the UE receives the message including the network address of the digital twin, it can store the received address of the digital twin and can mark the procedure as finished in case the message contained an error indicator instead of the address of the digital twin.

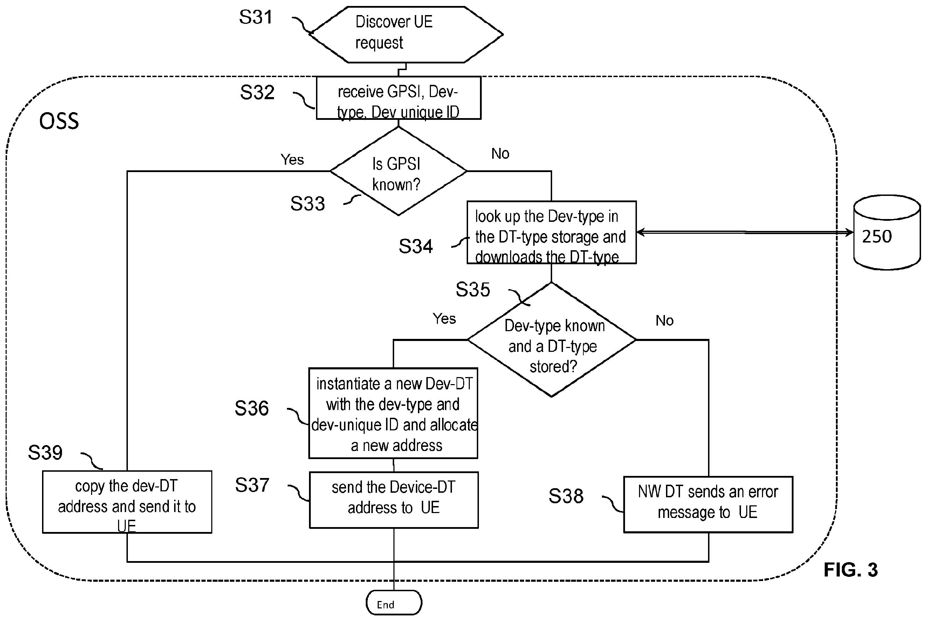

Fig. 3 shows in more detail the procedure at the management entity 200. In step S31 the management entity 200 discovers the request sent by the UE of step S24. In step S32 the management entity thus receives the request including the communication identifier, the network identifier, a type identifier uniquely identifying the type of device and including last but not least a device identifier which uniquely identifies the device such as a serial number. In step S33 the management entity will check whether the received communication identifier is already known. If this is not the case so that the communication identifier is not known to the management entity, it will look up the device type in the device type storage 250 and will download the device type. Accordingly, it will query its database 250 for a device type class that matches the device type identifier it has received with the request from the UE.

Accordingly, in step S34 the device type is determined and known after this step. In step S35 it is asked whether the device type is known and a digital twin type is downloaded. If this is the case, in step S36, a new device digital twin instance of that class is instantiated and a new address for the digital twin of the device is generated. Furthermore, the management entity registers the communication ID, the GPSI with that new address and stores the device ID such as its serial number received with the message and sends back an address acknowledgment message including the address of the digital twin of the device (S37). The management entity sets its status flag to disconnected. If in step S35 it is determined that the device type class matching the device type in the message is not found in the repository it may send an error message in step S38 including information such as device digital twin not applicable for the device type.

Referring back to step S33, if the communication identifier is already known and an address of the device digital twin is already registered, the management entity replies back to the UE with an discover address acknowledgment message including the already instantiated address of the device digital twin (S39). Fig. 3 discussed the instantiation procedure.

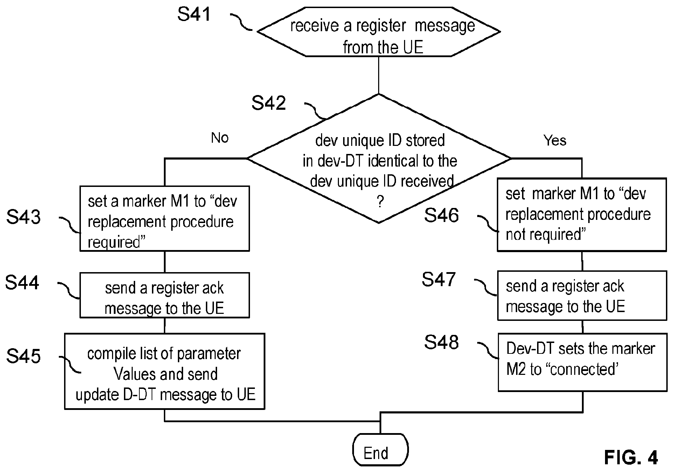

Fig. 4 now discusses the registration and device replacement procedure. As was discussed in connection with Fig. 3, the UE now has the address of the digital twin and Fig. 4 shows some of the steps carried out by the digital twin when receiving the register message from the UE. Accordingly, the message is received in step S41. This message can include the communication identifier of the device, the device type identifier and the device identifier. When the UE receives the acknowledgment message with the state flag being set to connected, the industrial device can initiate the update UE parameter procedure. Turning again to the digital twin, the digital twin will determine in step S42 whether the received device identifier is identical to the stored value. If the values match, the digital twin will reply with a message of the register acknowledgment and will set its status flag to connected. This flag is also included in the message sent. In step S46, it will set a first marker M1 (replacement flag) indicating that the device replacement procedure is not required as the unique identifier corresponds to the stored identifier which indicates that the device itself has not been replaced by another device of the same type. In step S47 a register acknowledgment message is sent to the UE and the digital twin sets a second marker M2 ( connection status flag) to connected in step S48. Returning to step S42 if the values do not match, the digital twin will reply with an register acknowledgment message and will set a first marker M1, the replacement flag, to a value that the device replacement procedure is required. It can furthermore set its state to not connected and the replacement flag to device replacement procedure required (S43). An acknowledgment message is sent back in step S44 and in step S45 it will compile a list of parameter values and will send an update message to the UE. Accordingly, the digital twin triggers an update parameter procedure and after the procedure is finished it may set its state to connected.

Furthermore, it is possible that when the state flag is set to connected in the UE, it may send an update UE parameter message to the digital twin including a list of parameter name and parameter value pairs, thus pairs of parameter names/parameter pairs (e.g. Name " QoS profile", value 1, or Name "Geo Location", value 210-23-2, or Name "Temperature range" value -60/+80). The device digital twin 100 then stores these pairs and replies with an acknowledgment message. Now the parameters in the industrial device and its digital twin are synchronized and other digital twins may read device parameters via the digital twin of device without any communication with the device itself.

The name and value pairs and the frequency of this procedure is application dependent. A special case may occur when the device is being powered down. The device digital twin, upon reception of such a powerdown indication, may set its status flag to disconnected.

Furthermore, it is possible that the device digital twin can send an update parameter message to the device including a list of parameter name and parameter value pairs that the device digital twin had previously stored during the previous update UE procedure that was initiated by the industrial device. Upon reception of such a message the device stores the received parameter values and replies with an acknowledgment message and sets its connection status flag M2 to connected. When the digital twin receives this acknowledgment message from the industrial device, it can set the status flag M2 to connected and the replacement flag M1 to the status that the device replacement procedure is not required. Now the parameters in the industrial device and its digital representation, the digital twin are synchronized. The name and the value pairs in this procedure can be application dependent.

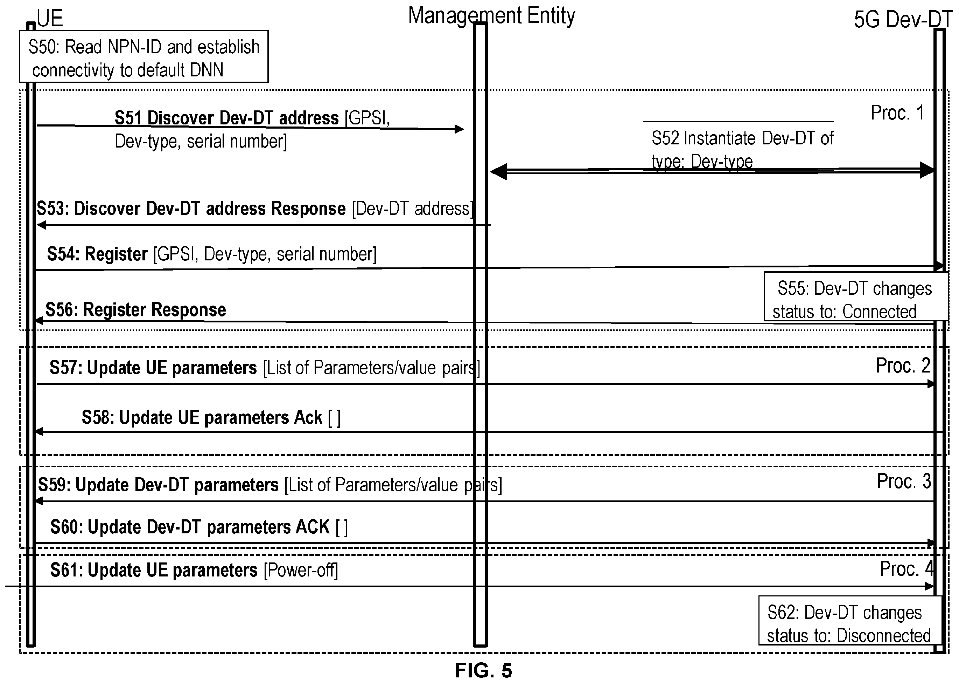

Fig. 5 summarizes in the shown message exchange some of the steps discussed above.

In step S50, the industrial device or UE is powered on for the first time and establishes a connectivity to the cellular network, by way of example using a radio access network. After having determined the address as discussed in connection with Fig. 2 it transmits a discover request to the management entity in step S51 which includes the communication identifier, the device type and the device identifier. The management entity then as discussed in connection with Fig. 3, determines whether the communication ID is known and determines whether the device type identifier is known and already stored in the database. As discussed in Fig. 3 in step S36 a new digital twin for the device is instantiated as also shown in Fig. 5 in step S52. In step S53 a discover response is transmitted back to the UE including the address of the digital twin device as discussed in step S37 in further detail. The UE now has the address of its digital twin and can transmit in step S54 a register message including the unique communication identifier, the unique device identifier and the device type. The digital twin, as discussed in Fig. 4 inter alia checks whether the device identifier corresponds to the device identifier stored within the digital twin. If this is not the case, a list of parameter values is generated and transmitted to the UE. In any case, in step S55 the digital twin sets its connection status to connected and transmits a register response back to the UE. Steps S51 to S56 were discussed above in more detail in Figs. 2 to 4 and include the detection procedure, the instantiation procedure and the registration and device replacement procedure.

Procedure 2 of Fig. 5 discloses how the UE can update its parameters so that the digital twin has the current parameters. These current parameters can include operating parameters such as parameter detected by the industrial device, such as the temperature in case of a temperature sensor. The operating parameters can furthermore include communication parameters indicating how the industrial device is able to communicate with the network or can include quality of service parameters or any other parameters. In case of a robot the operating parameters can include current operating positions of the manipulating elements, (the number of axes, value 4, or sensor read frequency, value 60 etc). In step S58 the digital twin transmits an acknowledgment message that it has received the parameters.

As mentioned above, it is also possible that the digital twin initiates an update of the parameters as stored in the digital twin to the UE as shown in Procedure 3 of Fig. 5. In step S59 the digital twin transmits an update message to the UE including all the necessary parameters of the industrial device which are needed for operating the industrial device. In step S60 an acknowledgment message is sent back.

Procedure 4 then discusses when the UE is powered down, it may in step S61 transmit an update message to the digital twin including the information that it will disconnect from the network and power down. In step S62 of the digital twin changes the connection status to disconnected and thus knows that the UE is not connected to the network anymore.

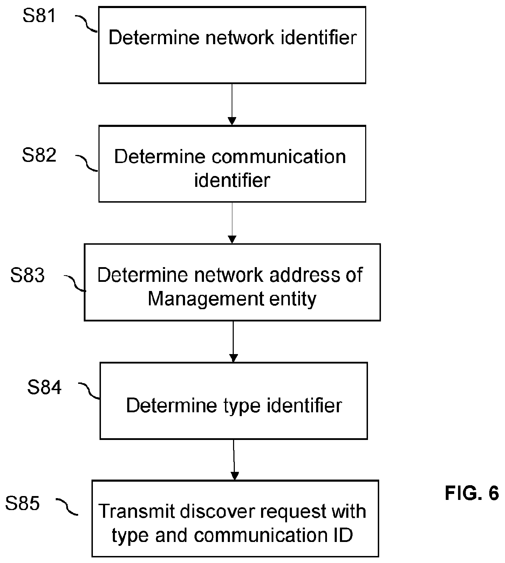

Fig. 6 summarizes some of the main steps carried out at the industrial device in the procedure discussed above. When the UE or industrial device 100 is powered on for the first time, it connects to the network and determines a network identifier which identifies the network to which it is connected. In step S82 the UE furthermore determines a communication identifier by which the industrial device is uniquely identified when communicating in the network to which it is connected. Based on the network identifier and to communication identifier the industrial device is able to determine a network address of the management entity which manages the digital twins of the industrial devices connected to the network (S83). The network may contain one or several of these management entities distributed over the network. After the network address determination in step S83 a type identifier is determined in step S84 and in step S85 a discover request is transmitted to the management entity as discussed above in Fig. 2 and Fig. 5 (S85).

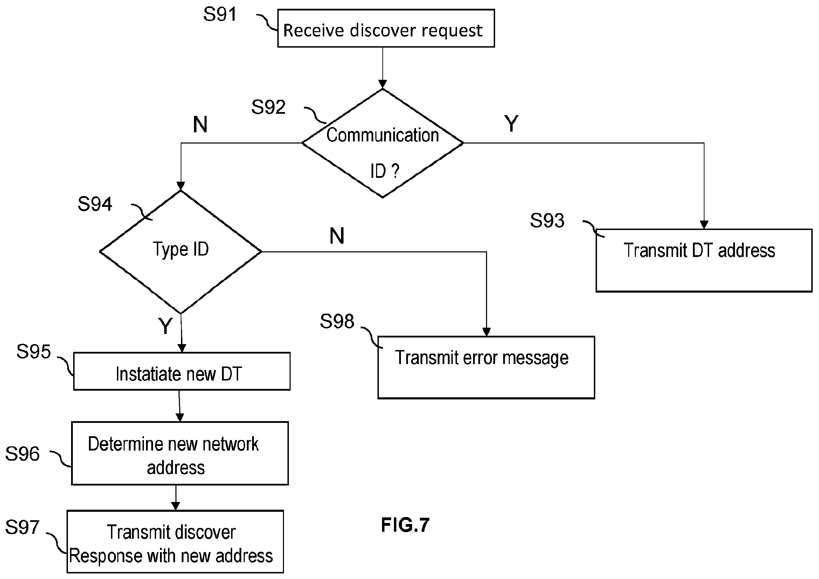

Fig. 7 shows an example flowchart of a method which summarizes some of the steps carried out at the management entity 200. In step S91 it receives the discover request as transmitted by the UE. In step S92 it is checked whether the communication identifier of the industrial device transmitting the request is known to the management entity. If this is the case, the address of the digital twin is transmitted to the UE. If the communication identifier is not known, it is determined whether the type identifier of the industrial device is known in step S94. If neither the communication identifier nor the type identifiers are known an error message is transmitted back to the UE (S98). If in step S94 the type identifier is known a new digital twin is instantiated in step S95 and a new network address is determined for the new digital twin in step S96 and a discover response is transmitted back to the UE in step S97 including the address of the newly generated digital twin.

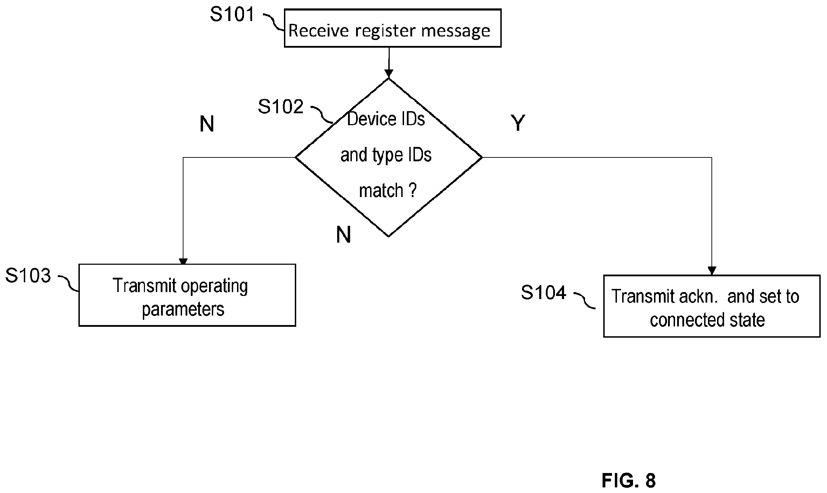

Fig. 8 summarizes the steps carried out by the digital twin in the procedure discussed above. In step S101 the register message is received from the industrial device. This register message comprises the communication identifier, the device type identifier and the device identifier itself such as the serial number as mentioned in step S54. In step S102 it is determined whether the received device identifier corresponds to an already stored device identifier and whether the received communication identifier corresponds to an already stored communication identifier. When an agreement is determined for both of these identifiers, an acknowledgment message is sent back to the UE and the connection status is set to connected. This step S104 was discussed in further detail in connection with Fig. 4 steps S46 to S48. If the received device identifier does not correspond to the already stored device identifier, but the received communication identifier corresponds to the already stored communication identifier, a transmission of the operating parameters is initiated as discussed in connectors Fig. 4 in step S43 to S45 (S103).

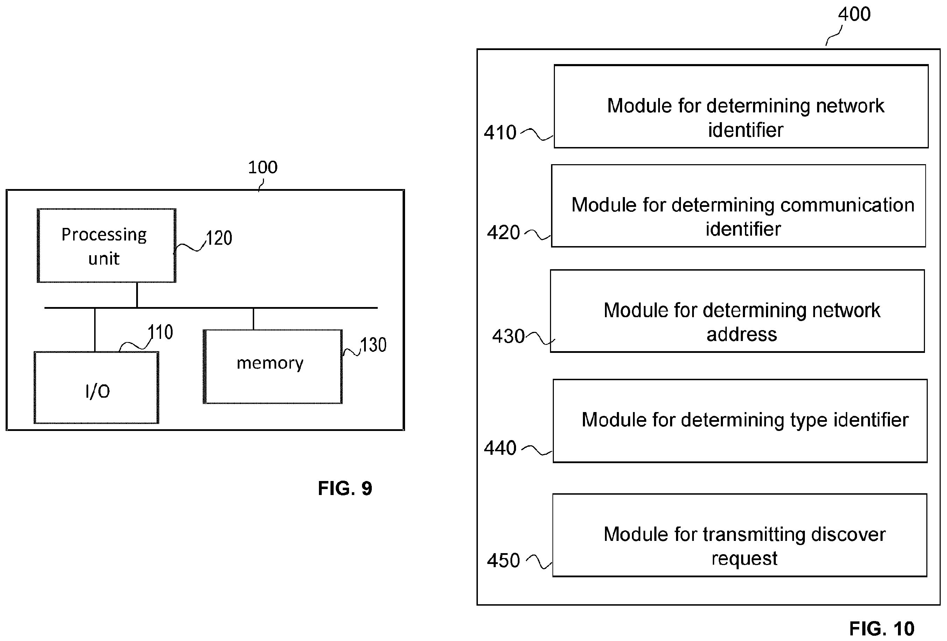

Fig. 9 shows a schematic architectural view of the industrial device 100 which can carry out the above discussed procedure for connecting to its digital twin. The industrial device 100 comprises an interface 110 which is provided for transmitting user data or control messages to other entities and to receive user data or control messages from other entities. The industrial device can be a robot, a temperature sensor, or any other IOT device. The interface 110 is configured to transmit the discover request and the register message and is configured to receive the corresponding responses from the management entity 200 or the digital twin 300. The industrial device furthermore comprises a processing unit 120 which is responsible for the operation of the industrial device 100. The processing entity 120 comprises one or more processors and can carry out instructions stored on a memory 130, wherein the memory may include a read-only memory, a random access memory, a mass storage, a hard disk or the like. The memory can furthermore include suitable program code to be executed by the processing unit 120 so as to implement the above described functionalities in which industrial device is involved.

Fig. 10 shows a further implementation of an industrial device 400 comprising a first module configured to determine a network identifier which identifies the cellular network to which it is connected. A second module 420 is provided configured to determine the communication identifier by which the industry device is uniquely identified for the communication with other entities in the network. A third module 430 is provided configured to determine the network address of the management entity taking into account at least the network identifier and the communication identifier. A fourth module 440 is provided configured to determine a type identifier identifying the type of device. A fifth module 450 is configured to transmit a discover request to the management entity which comprises the communication identifier and the type identifier.

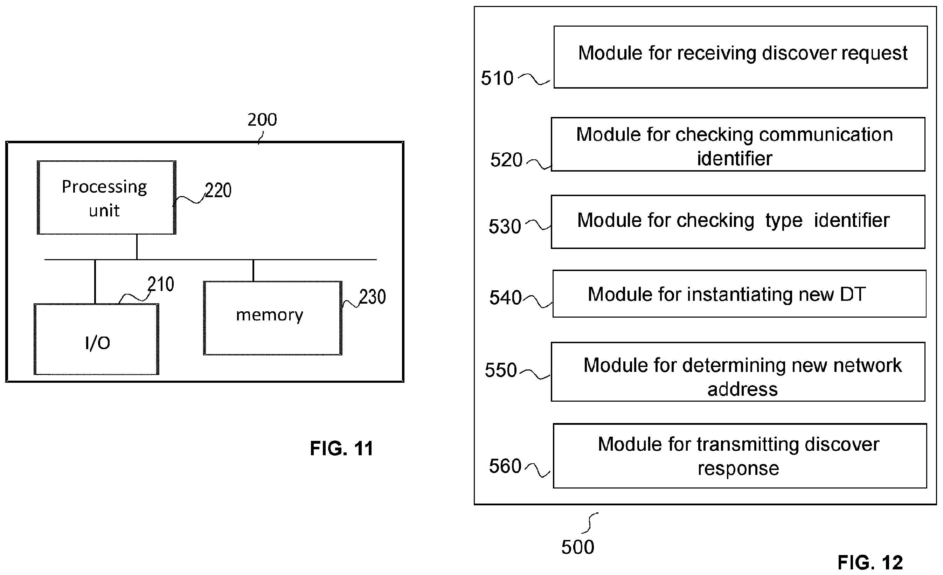

Fig. 11 shows a schematic architectural view of the management entity 200 which can manage the different digital twins as mentioned above. The management entity 200 comprises an interface 210 for receiving control messages or user data and for transmitting control messages or user data to other entities. The interface is configured to receive the discover request, is configured to transmit the discover response with the network address of the digital twin. The management entity 200 furthermore comprises a processing unit 220 which is responsible for the operation of the management entity 200. The processing entity 220 can comprise one or more processors which can carry out instructions stored on a memory 230, wherein the memory may include a read-only memory, a random access memory, a mass storage, a hard disk or the like. The memory 230 can furthermore include suitable program code to be executed by the processing unit 220 so as to implement the above-described functionalities in which the management entity is involved.

Fig. 12 shows another implementation of a management entity 500 which comprises a first module configured to receive the discover request from the industrial device. A second module 520 is provided configured to check whether the communication identifier received in the request is already known to the management entity. A third module 530 is configured to determine whether the type identifier of the industrial device from which the message is received is known to the management entity. A fourth module 540 is provided configured to instantiate a new digital twin for the industrial device taking into account the device type. A fifth module 550 can be provided configured to determine a new network address for the new digital twin and a six module 560 may be configured to transmit a discover response back to the industrial device which includes the new network address of the digital twin.

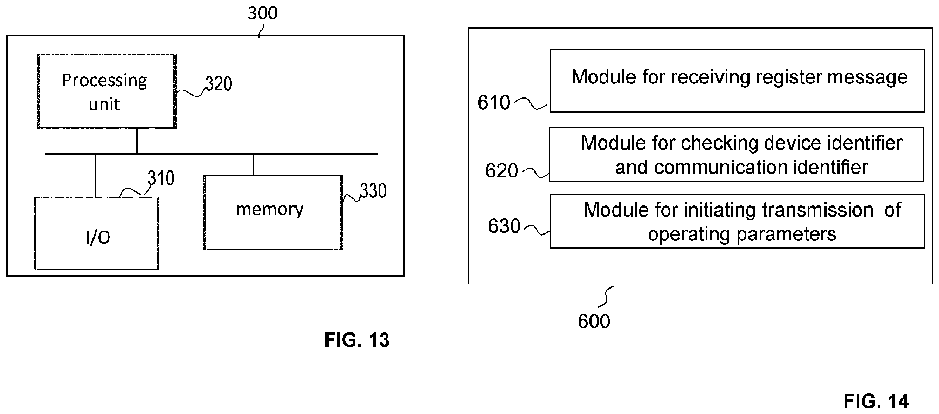

Fig. 13 shows a schematic architectural view of a digital twin 300 which can operate as discussed above. The digital twin 300 comprises an interface 310 provided for transmitting data or control messages to other entities and for receiving user data and control messages from other entities. The received and transmitted data can include operating parameters of the industrial device. The industrial device furthermore comprises a processing unit 320 which is responsible for the operation of the digital twin 300. The processing unit 320 can comprise one or more processors. The processing unit 320 can include one or more processors which can carry out instructions stored on a memory 330, wherein the memory can include a read-only memory, a random access memory, a mass storage, a hard disk or the like. The memory may furthermore include suitable program code to be executed by the processing unit 320 so as to implement the above-described functionalities in which the digital twin is involved.

Fig. 14 shows a further implementation of the digital twin comprising a first module 610 configured to receive the register message which includes at least the type identifier and the communication identifier and a device identifier of the industrial device. A further module 620 is provided configured to check whether the received device identifier corresponds to the device identifier stored within the digital twin. Furthermore, module 620 is configured to check whether the communication identifier as received corresponds to the already stored communication identifier. Module 630 is provided configured to initiate the transmission of the operating parameters in dependence on the result provided by module 620. When the two communication identifiers match, but the device identifier does not match, the digital twin can conclude that the device itself has been replaced so that the operating parameters from the digital twin are transmitted by module 630 to the industrial device.

From the above said some general conclusions can be drawn for the different entities involved.

As far as the industrial device is concerned, the industrial device may furthermore determine an access network identifier which identifies the access network by which the industrial device is connected to the cellular network. The network address of the management entity is then determined taking additionally into account the access network identifier in addition to the already used network identifier and the communication identifier.

Furthermore, it is possible that the industrial device determines a device identifier which uniquely identifies the industrial device, wherein the discover request transmitted to the management entity furthermore comprises the device identifier.

The industrial device may receive a discover response from the management entity in response to the discover request wherein the response comprises the network address of the digital twin of the industrial device. The industrial device transmits a register message to the digital twin based on the received network address mentioned in the discover response, and receives a register response from the digital twin which indicates that the industrial device is now connected to its digital twin. The industrial device can then initiate a synchronization operating parameters of the industrial device with its digital twin.

The industrial device can furthermore inform the digital twin when it is going to disconnect from the cellular network. The register message transmitted to the digital twin can include the type identifier, the communication identifier and the device identifier.

As far as the management entity 200 is concerned, the management entity receives the discover request from the industrial device. This discover request can additionally comprise a device identifier which uniquely identifies the corresponding industrial device from which the discover request is received.

When the communication identifier received together with the discover request is already known to the management entity, an already existing digital twin is determined together with an existing network address and where the already existing digital twin is stored. This existing network address is then transmitted to the industrial device together with the discover response.

When it is checked whether the communication identifier of the industrial device from which the message is received is already known to the management entity, the management entity may query a database such as database 250 for a digital twin type matching the received type identifier. If a digital twin type matching the received type identifier is found, the new digital twin is instantiated based on the matching digital twin type. Furthermore, when the communication identifier is not known to the management entity, the communication identifier may be stored in connection with the new digital twin.

As far as the digital twin itself is concerned, the digital twin checks whether the communication identifier received with the register message corresponds to the already stored communication identifier and checks whether the device identifiers corresponds to the already stored device identifier. If the received device identifier does not correspond to the already stored device identifier and the received communication identifier corresponds to the already stored communication identifier, an acknowledgment response may be transmitted in response to the register message and the initiating of the transmission of the operating parameters can comprise the step of generating a list of the operating parameters wherein an update request is transmitted to the industrial device including the list and the industrial device is requested to update its operating parameters.

If the received device identifier corresponds to the already stored device identifier and the received communication identifier corresponds to the already stored communication identifier, the connection status of the industrial device which indicates the connection status of the industrial device to its digital twin is set to a connected state and it is determined that an update of the operating parameters is not necessary.

When the digital twin receives the information that the industrial device is going to disconnect from the cellular network the connection status is set to disconnected.

The described solution provides a mechanism to automatically connect an un-configured industrial device into a production environment and triggers the loading of the correct device specific configuration data into the device.

By combining specific device information with corresponding cellular network internal information the industrial device can be uniquely identified in the network which may be a production network.

Once the industrial device is identified and its unique position in the shop floor or in the network is identified, the industrial device can be automatically connected to its specific digital twin instance and the configuration exchange can be triggered. The network information alone or the device information alone may not be sufficient to identify the correct digital twin instance. The advantage of the solution discussed above is that no manual interference is required in the industrial device handling scenarios. It provides a solution for the initial deployment of the device and for a replacement of the device.

Using the management entity can keep an up to date overview which devices are currently connected and integrated into the system of industrial devices and which are connected to the network.

## Claims

1. A method for operating an industrial device (100, 400) connected to a cellular network (50), the method comprising:
- determining a network identifier identifying the cellular network,
- determining an access network identifier identifying an access network by which the industrial device (100, 400) is connected to the cellular network,
- determining a communication identifier by which the industrial device (100, 400) is uniquely identified when communicating in the cellular network,
- determining a network address of a management entity (200, 500) configured to manage digital twins of a plurality of industrial devices in the cellular network taking into account at least the network identifier, the access network identifier, and the communication identifier,
- determining a type identifier identifying a type of device of the industrial device,
- transmitting a discover request to the management entity(200, 500) based on the determined network address, the discover request comprising at least the communication identifier, and the type identifier.

2. The method according to claim 1, further determining a device identifier uniquely identifying the industrial device, wherein the discover request additionally comprises the device identifier.

3. The method according to claim 1 or 2, further comprising:
- receiving a discover response from the management entity (200) in response to the discover request, the response message comprising a network address of a digital twin (300) of the industrial device,
- transmitting a register message to the digital twin (300) of the industrial device based on the received network address,
- receiving a register response from the digital twin (300) indicating that the industrial device is now connected to its digital twin,
- initiating a synchronization of operating parameters of the industrial device with its digital twin., and preferably further informing the digital twin (300) when the industrial device is going to disconnect from the cellular network.

4. The method according to claim 3, wherein the register message comprises the type identifier, the communication identifier and a device identifier uniquely identifying the industrial device.

5. A method for operating a management entity (200, 500) configured to manage digital twins of a plurality of industrial devices, the method comprising:
- receiving a discover request from a first industrial device (100) of the plurality of industrial devices, the discover request comprising at least a communication identifier by which the industrial device is uniquely identified when communicating in the cellular network, and a type identifier identifying which type of device the industrial device is,
- checking whether the communication identifier of the first industrial device is already known to the management entity, wherein if this is not the case
- determining whether the type identifier of the first industrial device is known to the management entity, and in the affirmative,
- instantiating a new digital twin (300) for the first industrial device based on the device type of the first industrial device,
- determining a new network address for the new digital twin,
- transmitting a discover response comprising the new network address to the first industrial device.

6. The method according to claim 5, wherein the received discover request additionally comprises a device identifier uniquely identifying the first industrial device, wherein the device identifier is stored in connection with the new digital twin.

7. The method according to claim 5 or 6, wherein if the communication identifier is already known, an already existing digital twin is determined together with an existing network address where the already existing digital twin is stored, wherein the existing network address is transmitted with the discover response.

8. The method according to any of claims 5 to 7, wherein checking whether the communication identifier of the first industrial device is already known to the management entity comprises querying a database for a digital twin type matching the received type identifier, wherein if a digital twin type matching the received type identifier is found, the new digital twin is instantiated based on the matching digital twin type.

9. The method according to any of claims 5 to 8, wherein when the communication identifier is not known to the management entity, the communication identifier is stored in connection with the new digital twin.

10. A method for operating a digital twin (300) of an industrial device, wherein the digital twin and the industrial device are connected to a cellular network, the method comprising:
- receiving a register message from the industrial device (100), the register message comprising a type identifier identifying which type of device the industrial device is, a communication identifier, by which the industrial device (100, 400) is uniquely identified when communicating in the cellular network, and a device identifier uniquely identifying the industrial device,
- determining whether the received device identifier and the received communication identifier correspond to an already stored device identifier and an already stored communication identifier, respectively, which are stored in connection with the digital twin of the industrial device, wherein if the received device identifier does not correspond to the already stored device identifier and the received communication identifier corresponds to the already stored communication identifier,
- initiating a transmission of operating parameters of the industrial device to the industrial device (100).

11. The method according to claim 10, wherein if the received device identifier does not correspond to the already stored device identifier and the received communication identifier corresponds to the already stored communication identifier,
- an acknowledgment response is transmitted in response to the register message,
- initiating the transmission of the operating parameter comprises generating a list of the operating parameters and transmitting an update request including the list to the industrial device requesting the industrial device to update its operating parameters, or
if the received device identifier corresponds to the already stored device identifier and the received communication identifier corresponds to the already stored communication identifier, a connection status of the industrial device indicating a connection status of the industrial device to its digital twin is set to connected and it is determined that an update of the operating parameters is not necessary.

12. The method according to any of claims 10 or 11, further receiving an information that the industrial device is going to disconnect from the cellular network and setting a connection status of the industrial device indicating a connection status of the industrial device to its digital twin to disconnected.

13. An industrial device connected to a cellular network, the industrial device being operative to carry out a method as mentioned in any of claims 1 to 4.

14. A management entity configured to manage digital twins of a plurality of industrial devices, the management entity being operative to: carry out a method as mentioned in any of claims 5 to 9.

15. A digital twin of an industrial device, wherein the digital twin and the industrial device are connected to a cellular network, the digital twin being operative to carry out a method as mentioned in any of claims 10 to 12.

## Patentansprüche

1. Verfahren zum Betreiben einer industriellen Vorrichtung (100, 400), die mit einem zellularen Netzwerk (50) verbunden ist, wobei das Verfahren Folgendes umfasst:
- Bestimmen einer Netzwerkkennung, die das zellulare Netzwerk identifiziert,
- Bestimmen einer Zugangsnetzwerkkennung, die ein Zugangsnetzwerk identifiziert, durch das die industrielle Vorrichtung (100, 400) mit dem zellularen Netzwerk verbunden ist,
- Bestimmen einer Kommunikationskennung, durch die die industrielle Vorrichtung (100, 400) eindeutig identifiziert wird, wenn sie in dem zellularen Netzwerk kommuniziert,
- Bestimmen einer Netzwerkadresse einer Verwaltungsentität (200, 500), die dazu konfiguriert ist, digitale Zwillinge einer Mehrzahl von industriellen Vorrichtungen in dem zellularen Netzwerk unter Berücksichtigung mindestens der Netzwerkkennung, der Zugangsnetzwerkkennung und der Kommunikationskennung zu verwalten,
- Bestimmen einer Typkennung, die einen Vorrichtungstyp der industriellen Vorrichtung identifiziert,
- Senden einer Erkennungsanforderung an die Verwaltungsentität (200, 500) basierend auf der bestimmten Netzwerkadresse, wobei die Erkennungsanforderung mindestens die Kommunikationskennung und die Typkennung umfasst.

2. Verfahren nach Anspruch 1, ferner Bestimmen einer Vorrichtungskennung, die die industrielle Vorrichtung eindeutig identifiziert, wobei die Erkennungsanforderung zusätzlich die Vorrichtungskennung umfasst.

3. Verfahren nach Anspruch 1 oder 2, ferner umfassend:
- Empfangen einer Erkennungsantwort von der Verwaltungsentität (200) in Reaktion auf die Erkennungsanforderung, wobei die Antwortnachricht eine Netzwerkadresse eines digitalen Zwillings (300) der industriellen Vorrichtung umfasst,
- Senden einer Registrierungsnachricht an den digitalen Zwilling (300) der industriellen Vorrichtung basierend auf der empfangenen Netzwerkadresse,
- Empfangen einer Registrierungsantwort von dem digitalen Zwilling (300), die angibt, dass die industrielle Vorrichtung nun mit ihrem digitalen Zwilling verbunden ist,
- Initiieren einer Synchronisation von Betriebsparametern der industriellen Vorrichtung mit ihrem digitalen Zwilling und vorzugsweise ferner Informieren des digitalen Zwillings (300), wenn sich die industrielle Vorrichtung von dem zellularen Netzwerk trennt.

4. Verfahren nach Anspruch 3, wobei die Registrierungsnachricht die Typkennung, die Kommunikationskennung und eine Vorrichtungskennung umfasst, die die industrielle Vorrichtung eindeutig identifiziert.

5. Verfahren zum Betreiben einer Verwaltungsentität (200, 500), die dazu konfiguriert ist, digitale Zwillinge einer Mehrzahl von industriellen Vorrichtungen zu verwalten, wobei das Verfahren Folgendes umfasst:
- Empfangen einer Erkennungsanforderung von einer ersten industriellen Vorrichtung (100) der Mehrzahl von industriellen Vorrichtungen, wobei die Erkennungsanforderung mindestens eine Kommunikationskennung, durch die die industrielle Vorrichtung eindeutig identifiziert wird, wenn die in dem zellularen Netzwerk kommuniziert, und eine Typkennung umfasst, die identifiziert, um welchen Vorrichtungstyp es sich bei der industriellen Vorrichtung handelt,
- Überprüfen, ob die Kommunikationskennung der ersten industriellen Vorrichtung der Verwaltungsentität bereits bekannt ist, wobei, falls dies nicht der Fall ist:
- Bestimmen, ob die Typkennung der ersten industriellen Vorrichtung der Verwaltungsentität bereits bekannt ist, und falls ja,
- Instanziieren eines neuen digitalen Zwillings (300) für die erste industrielle Vorrichtung basierend auf dem Vorrichtungstyp der ersten industriellen Vorrichtung,
- Bestimmen einer neuen Netzwerkadresse für den neuen digitalen Zwilling,
- Senden einer Erkennungsantwort, die die neue Netzwerkadresse umfasst, an die erste industrielle Vorrichtung.

6. Verfahren nach Anspruch 5, wobei die empfangene Erkennungsanforderung zusätzlich eine Vorrichtungskennung umfasst, die die erste industrielle Vorrichtung eindeutig identifiziert, wobei die Vorrichtungskennung in Verbindung mit dem neuen digitalen Zwilling gespeichert wird.

7. Verfahren nach Anspruch 5 oder 6, wobei, falls die Kommunikationskennung bereits bekannt ist, ein bereits bestehender digitaler Zwilling zusammen mit einer bestehenden Netzwerkadresse bestimmt wird, an der der bereits bestehende digitale Zwilling gespeichert ist, wobei die bestehende Netzwerkadresse mit der Erkennungsantwort gesendet wird.

8. Verfahren nach einem der Ansprüche 5 bis 7, wobei das Überprüfen, ob die Kommunikationskennung der ersten industriellen Vorrichtung der Verwaltungsentität bereits bekannt ist, Abfragen einer Datenbank nach einem digitalen Zwillingstyp umfasst, der mit der empfangenen Typkennung übereinstimmt, wobei, falls ein digitaler Zwillingstyp gefunden wird, der mit der empfangenen Typkennung übereinstimmt, der neue digitale Zwilling basierend auf dem übereinstimmenden digitalen Zwillingstyp instanziiert wird.

9. Verfahren nach einem der Ansprüche 5 bis 8, wobei, wenn die Kommunikationskennung der Verwaltungsentität nicht bekannt ist, die Kommunikationskennung in Verbindung mit dem neuen digitalen Zwilling gespeichert wird.

10. Verfahren zum Betreiben eines digitalen Zwillings (300) einer industriellen Vorrichtung, wobei der digitale Zwilling und die industrielle Vorrichtung mit einem zellularen Netzwerk verbunden sind, wobei das Verfahren Folgendes umfasst:
- Empfangen einer Registrierungsnachricht von der industriellen Vorrichtung (100), wobei die Registrierungsnachricht eine Typkennung, die identifiziert, um welchen Vorrichtungstyp es sich bei der industriellen Vorrichtung handelt, eine Kommunikationskennung, durch die die industrielle Vorrichtung (100, 400) eindeutig identifiziert wird, wenn sie in dem zellularen Netzwerk kommuniziert, und eine Vorrichtungskennung umfasst, die die industrielle Vorrichtung eindeutig identifiziert,
- Bestimmen, ob die empfangene Vorrichtungskennung und die empfangene Kommunikationskennung einer bereits gespeicherten Vorrichtungskennung bzw. einer bereits gespeicherten Kommunikationskennung entsprechen, die in Verbindung mit dem digitalen Zwilling der industriellen Vorrichtung gespeichert sind, wobei, falls die empfangene Vorrichtungskennung nicht der bereits gespeicherten Vorrichtungskennung entspricht und die empfangene Kommunikationskennung der bereits gespeicherten Kommunikationskennung entspricht,
- eine Übertragung von Betriebsparametern der industriellen Vorrichtung an die industrielle Vorrichtung (100) initiiert wird.

11. Verfahren nach Anspruch 10, wobei, falls die empfangene Vorrichtungskennung nicht der bereits gespeicherten Vorrichtungskennung entspricht und die empfangene Kommunikationskennung der bereits gespeicherten Kommunikationskennung entspricht,
- eine Bestätigungsantwort in Reaktion auf die Registrierungsnachricht gesendet wird,
- wobei das Initiieren der Übertragung der Betriebsparameter Erstellen einer Liste der Betriebsparameter und Senden einer die Liste umfassenden Aktualisierungsanforderung an die industrielle Vorrichtung umfasst, die die industrielle Vorrichtung auffordert, ihre Betriebsparameter zu aktualisieren, oder,
falls die empfangene Vorrichtungskennung der bereits gespeicherten Vorrichtungskennung entspricht und die empfangene Kommunikationskennung der bereits gespeicherten Kommunikationskennung entspricht, ein Verbindungsstatus der industriellen Vorrichtung, der einen Verbindungsstatus der industriellen Vorrichtung mit ihrem digitalen Zwilling angibt, auf verbunden gesetzt und bestimmt wird, dass keine Aktualisierung der Betriebsparameter erforderlich ist.

12. Verfahren nach einem der Ansprüche 10 oder 11, ferner Empfangen einer Information, dass sich die industrielle Vorrichtung von dem zellularen Netzwerk trennt, und Setzen eines Verbindungsstatus der industriellen Vorrichtung, der einen Verbindungsstatus der industriellen Vorrichtung mit ihrem digitalen Zwilling angibt, auf getrennt.

13. Industrielle Vorrichtung, die mit einem zellularen Netzwerk verbunden ist, wobei die industrielle Vorrichtung zum Durchführen eines Verfahrens nach einem Ansprüche 1 bis 4 ausgelegt ist.

14. Verwaltungsentität, die dazu konfiguriert ist, digitale Zwillinge einer Mehrzahl von industriellen Vorrichtungen zu verwalten, wobei die Verwaltungsentität zu Folgendem ausgelegt ist: Durchführen eines Verfahrens nach einem der Ansprüche 5 bis 9.

15. Digitaler Zwilling einer industriellen Vorrichtung, wobei der digitale Zwilling und die industrielle Vorrichtung mit einem zellularen Netzwerk verbunden sind, wobei der digitale Zwilling zum Durchführen eines Verfahrens nach einem Ansprüche 10 bis 12 ausgelegt ist.

## Revendications

1. Procédé de fonctionnement d'un dispositif industriel (100, 400) connecté à un réseau cellulaire (50), le procédé comprenant :
- la détermination d'un identifiant de réseau qui identifie le réseau cellulaire,
- la détermination d'un identifiant de réseau d'accès qui identifie un réseau d'accès par lequel le dispositif industriel (100, 400) est connecté au réseau cellulaire,
- la détermination d'un identifiant de communication par lequel le dispositif industriel (100, 400) est identifié de manière unique lorsqu'il communique dans le réseau cellulaire,
- la détermination d'une adresse de réseau d'une entité de gestion (200, 500) configurée pour gérer des jumeaux numériques d'une pluralité de dispositifs industriels dans le réseau cellulaire en tenant compte au moins de l'identifiant de réseau, de l'identifiant de réseau d'accès et de l'identifiant de communication,
- la détermination d'un identifiant de type qui identifie un type de dispositif du dispositif industriel,
- la transmission d'une demande de découverte à l'entité de gestion (200, 500) sur la base de l'adresse de réseau déterminée, la demande de découverte comprenant au moins l'identifiant de communication et l'identifiant de type.

2. Procédé selon la revendication 1, comprenant en outre un identifiant de dispositif qui identifie de manière unique le dispositif industriel, dans lequel la demande de découverte comprend également l'identifiant de dispositif.

3. Procédé selon la revendication 1 ou 2, comprenant en outre :
- la réception d'une réponse de découverte depuis l'entité de gestion (200) en réponse à la demande de découverte, le message de réponse comprenant une adresse de réseau d'un jumeau numérique (300) du dispositif industriel,
- la transmission d'un message d'enregistrement au jumeau numérique (300) du dispositif industriel sur la base de l'adresse de réseau reçue,
- la réception d'une réponse d'enregistrement depuis le jumeau numérique (300) indiquant que le dispositif industriel est désormais connecté à son jumeau numérique,
- l'initiation d'une synchronisation de paramètres de fonctionnement du dispositif industriel avec son jumeau numérique, et de préférence en outre l'information du jumeau numérique (300) lorsque le dispositif industriel va se déconnecter du réseau cellulaire.

4. Procédé selon la revendication 3, dans lequel le message d'enregistrement comprend l'identifiant de type, l'identifiant de communication et un identifiant de dispositif qui identifie de manière unique le dispositif industriel.

5. Procédé de fonctionnement d'une entité de gestion (200, 500) configurée pour gérer des jumeaux numériques d'une pluralité de dispositifs industriels, le procédé comprenant :
- la réception d'une demande de découverte depuis un premier dispositif industriel (100) parmi la pluralité de dispositifs industriels, la demande de découverte comprenant au moins un identifiant de communication par lequel le dispositif industriel est identifié de manière unique lorsqu'il communique dans le réseau cellulaire, et un identifiant de type qui identifie le type de dispositif du dispositif industriel,
- la vérification si l'identifiant de communication du premier dispositif industriel est déjà connu par l'entité de gestion, dans lequel, si tel n'est pas le cas
- la détermination si l'identifiant de type du premier dispositif industriel est connu par l'entité de gestion et, si tel est le cas,
- l'instanciation d'un nouveau jumeau numérique (300) pour le premier dispositif industriel sur la base du type du dispositif du premier dispositif industriel,
- la détermination d'une nouvelle adresse de réseau pour le nouveau jumeau numérique,
- la transmission d'une réponse de découverte comprenant la nouvelle adresse de réseau au premier dispositif industriel.

6. Procédé selon la revendication 5, dans lequel la demande de découverte reçue comprend également un identifiant de dispositif qui identifie de manière unique le premier dispositif industriel, dans lequel l'identifiant de dispositif est stocké en relation avec le nouveau jumeau numérique.

7. Procédé selon la revendication 5 ou 6, dans lequel, si l'identifiant de communication est déjà connu, un jumeau numérique déjà existant est déterminé avec une adresse de réseau existante où le jumeau numérique déjà existant est stocké, dans lequel l'adresse de réseau existante est transmise avec la réponse de découverte.

8. Procédé selon l'une quelconque des revendications 5 à 7, dans lequel la vérification si l'identifiant de communication du premier dispositif industriel est déjà connu par l'entité de gestion comprend la demande, à une base de données, d'un type de jumeau numérique correspondant à l'identifiant de type reçu, dans lequel, si un type de jumeau numérique correspondant à l'identifiant de type reçu est trouvé, le nouveau jumeau numérique est instancié sur la base du type de jumeau numérique correspondant.

9. Procédé selon l'une quelconque des revendications 5 à 8, dans lequel, lorsque l'identifiant de communication n'est pas connu par l'entité de gestion, l'identifiant de communication est stocké en relation avec le nouveau jumeau numérique.

10. Procédé de fonctionnement d'un jumeau numérique (300) d'un dispositif industriel, dans lequel le jumeau numérique et le dispositif industriel sont connectés à un réseau cellulaire, le procédé comprenant :
- la réception d'un message d'enregistrement depuis le dispositif industriel (100), le message d'enregistrement comprenant un identifiant de type qui identifie le type de dispositif du dispositif industriel, un identifiant de communication, par lequel le dispositif industriel (100, 400) est identifié de manière unique lorsqu'il communique dans le réseau cellulaire, et un identifiant de dispositif qui identifie de manière unique le dispositif industriel,
- la détermination si l'identifiant de dispositif reçu et l'identifiant de communication reçu correspondent respectivement à un identifiant de dispositif déjà stocké et à un identifiant de communication déjà stocké qui sont stockés en relation avec le jumeau numérique du dispositif industriel, dans lequel, si l'identifiant de dispositif reçu ne correspond pas à l'identifiant de dispositif déjà stocké et l'identifiant de communication reçu correspond à l'identifiant de communication déjà stocké,
- l'initiation d'une transmission de paramètres de fonctionnement du dispositif industriel au dispositif industriel (100).

11. Procédé selon la revendication 10, dans lequel, si l'identifiant de dispositif reçu ne correspond pas à l'identifiant de dispositif déjà stocké et l'identifiant de communication reçu correspond à l'identifiant de communication déjà stocké,
- une réponse d'accusé de réception est transmise en réponse au message d'enregistrement,
- l'initiation de la transmission des paramètres de fonctionnement comprend la génération d'une liste des paramètres de fonctionnement et la transmission d'une demande de mise à jour incluant la liste au dispositif industriel demandant au dispositif industriel de mettre à jour ses paramètres de fonctionnement, ou
si l'identifiant de dispositif reçu correspond à l'identifiant de dispositif déjà stocké et l'identifiant de communication reçu correspond à l'identifiant de communication déjà stocké, un état de connexion du dispositif industriel indiquant un état de connexion du dispositif industriel à son jumeau numérique est défini à connecté et il est déterminé qu'une mise à jour des paramètres de fonctionnement n'est pas nécessaire.

12. Procédé selon l'une quelconque des revendications 10 et 11, comprenant en outre la réception d'une information que le dispositif industriel va se déconnecter du réseau cellulaire et la définition d'un état de connexion du dispositif industriel indiquant un état de connexion du dispositif industriel à son jumeau numérique à déconnecté.

13. Dispositif industriel connecté à un réseau cellulaire, le dispositif industriel étant fonctionnel pour réaliser un procédé selon l'une quelconque des revendications 1 à 4.

14. Entité de gestion configurée pour gérer des jumeaux numériques d'une pluralité de dispositifs industriels, l'entité de gestion étant fonctionnelle pour réaliser un procédé selon l'une quelconque des revendications 5 à 9.

15. Jumeau numérique d'un dispositif industriel, dans lequel le jumeau numérique et le dispositif industriel sont connectés à un réseau cellulaire, le jumeau numérique étant fonctionnel pour réaliser un procédé selon l'une quelconque des revendications 10 à 12.
